(19) Europäisches Patentamt
European Patent Office
Office européen des brevets

(11) **EP 2 677 496 B1**

## (12) EUROPEAN PATENT SPECIFICATION

(45) Date of publication and mention
of the grant of the patent:
**27.09.2017 Bulletin 2017/39**

(51) Int Cl.:
**G06T 7/529** (2017.01)

(21) Application number: **12172821.6**

(22) Date of filing: **20.06.2012**

(54) **Method and device for determining a depth image**

Verfahren und Vorrichtung zum Bestimmung eines Tiefenbildes

Procédé et dispositif pour déterminer une image de profondeur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.12.2013 Bulletin 2013/52**

(73) Proprietor: **Vestel Elektronik Sanayi ve Ticaret A.S.**
**45030 Manisa (TR)**

(72) Inventors:
• **Bastug, Ahmet**
**45030 Manisa (TR)**
• **Ozer, Nuri**
**45030 Manisa (TR)**

(74) Representative: **Cayli, Hülya**
**Paragon Consultancy Inc.**
**Koza Sokak No: 63/2**
**GOP**
**06540 Ankara (TR)**

(56) References cited:
**US-A1- 2007 024 614     US-A1- 2010 073 364**

• **GIL J Y ET AL: "Efficient dilation, erosion, opening, and closing algorithms", IEEE TRANSACTIONS ON PATTERN ANALYSIS AND MACHINE INTELLIGENCE, IEEE SERVICE CENTER, LOS ALAMITOS, CA, US, vol. 24, no. 12, 1 December 2002 (2002-12-01), pages 1606-1617, XP011095250, ISSN: 0162-8828, DOI: 10.1109/TPAMI.2002.1114852**
• **ZIOU D ET AL: "EDGE DETECTION TECHNIQUES-AN OVERVIEW", PATTERN RECOGNITION. IMAGE ANALYSIS, ALLEN PRESS, LAWRENCE, KS, US, vol. 8, no. 4, 1 January 1998 (1998-01-01) , pages 537-559, XP008029269, ISSN: 1054-6618**

EP 2 677 496 B1

**Description**

**Technical Field**

Various embodiments relate generally to image processing. Furthermore, various embodiments relate to a method and a device for determining a depth image.

**Background**

With the development and success of three-dimensional (3D) technologies, its application is not limited to 3D movies in theaters, but is extending to home electronics, such as 3D TVs and other 3D consumer products. 3D vision or stereoscopic vision may usually be created by presenting two slightly different sets of images to a viewer, wherein one set includes left eye images corresponding to a left eye viewpoint and the other set includes right eye images corresponding to a right eye viewpoint. 3D displays (e.g., CRT, LCD, Plasma, etc.) show left eye and right eye views on the same surface, and by temporal or spatial multiplexing, make the left eye of a viewer only see the left eye view and the right eye only see the right-eye view. Disparities between the two views provide a vision with depth perception to the viewer, and make the viewer perceive a stereoscopic view.

Two-dimensional (2D) images with multiple viewpoints are usually necessary to provide a 3D image or video with depth information. However, accessible 3D content is scarce, e.g. limited to a few sports and documentary broadcasts obtained by expensive subscription fees. In such situations wherein only 2D content is available, there may be a need to convert the 2D content to 3D content.

One approach is to use time-of-flight (TOF) cameras to produce depth values for each pixel on every image frame, which requires an extra camera.

US Patent publication No. US 2010/0073364 A1 discloses a method and an apparatus generating a depth map for 2D-to-3D conversion. A depth order is restored based on a line tracing mechanism and an edge map generated from an input 2D image, and a 3D image is generated using the ordered depth information. The input 2D image is downscaled at the beginning and an edge map is generated by using luminance values of the image. A line map is generated by tracing the edges which are higher than a predefined threshold. A depth map having a sequential depth order is generated using a plurality of lines of the line map, which depth map is up-scaled and smoothed. The 3D image is generated using the final depth map.

Another patent document with no: US2007024614A1 discloses a method for generating a depth map from a two-dimensional source image for stereoscopic and multiview imaging. Said method comprises the steps of identifying a subset of the array of pixels representing an edge of at least one local region of the source image, the edge being defined by a predetermined image parameter having an estimated value exceeding a predefined threshold; assigning to each pixel within said subset, a depth value based on the corresponding estimated value of the image parameter; smoothing the depth map to a near-saturation level, so selected as to minimize dis-occluded regions around each edge; using a depth image based rendering (DIBR) algorithm to create a plurality of deviated images by processing the source image based on the depth map; and selecting from the source image and the plurality of deviated images more than one stereoscopic image pairs, so as to give an impression of being captured from different camera positions. However said document discloses single level processing of the edge map.

**Summary**

Various embodiments provide a method and a device for determining a depth image for a digital image, as defined in the appended claims 1 and 7.

**Brief Description of the Drawings**

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:

Fig. 1 shows a schematic diagram of a device according to an embodiment.
Fig. 2 shows a flow diagram according to an embodiment.
Fig. 3 shows a flow diagram according to another embodiment.
Fig. 4 illustrates image downscaling according to an embodiment.
Fig. 5 illustrates edge filtering according to an embodiment.

Fig. 6 illustrates maximum-filtered downscaling according to an embodiment.
Fig. 7 illustrates average filtered downscaling according to an embodiment.
Fig. 8 illustrates low pass filtering according to an embodiment.
Fig. 9 illustrates edge map upscaling according to an embodiment.
Fig. 10 illustrates edge map blending according to an embodiment.
Fig. 11 illustrates a mapping function between an edge map and a depth map according to an embodiment.
Fig. 12 shows an image system according to an embodiment.

**Detailed Description**

Various embodiments provide a method and a device for determining a depth image for a digital image. Embodiments provide more accurate depth information for 2D image or video at low computation cost, such that 2D image or video may be converted to 3D image or video using the determined depth image.

Various embodiments are directed to a method for determining a depth image for a digital image including a plurality of picture elements (also referred to as pixels). The method may include edge filtering the digital image to determine an edge map, wherein the edge map includes a plurality of edge values and each edge value is associated with at least one picture element; determining for each edge value, if the edge value is greater than a predefined threshold value; if the edge value is greater than the predefined threshold value, increasing the edge value to determine a processed edge map; and determining the depth image using the processed edge map.

In an embodiment, if the edge value is greater than the predefined threshold value, the edge value may be increased dependent on the difference between the edge value and the predefined threshold value.

In another embodiment, determining if the edge value is greater than the predefined threshold value may include determining a difference value between a maximum edge value and a minimum edge value within a predefined neighboring region, and determining whether the difference value is greater than the predefined threshold value. If the difference value is greater than the predefined threshold value, the edge value may be increased dependent on the difference between the maximum edge value within the predefined neighboring region and the predefined threshold value.

The digital image may be a 2D image, e.g. an image captured by a camera from a single viewpoint. The digital image may be an image frame of a video including a sequence of image frames. For the purpose of simplicity, the method and device in this description is described with regard to images, but it is understood that the method and device of the embodiments may apply similarly to each image frame of the video to process the entire video.

In an embodiment, the edge filtering may include determining, for each picture element of the digital image, a maximum picture element value associated with a picture element in a predefined neighboring region of the respective picture element and a minimum picture element value associated with a picture element in a predefined neighboring region of the respective picture element. A difference value between the maximum picture element value and the minimum picture element value may be determined, and the difference value may be associated with the respective at least one picture element. Each edge value associated with at least one picture element may be determined based on the difference value. In this embodiment, the edge filtering may include maximum-minimum filtering. In other embodiments, the edge filtering may include other filtering suitable for detecting the edges, such as maximum filtering and average filtering, for example.

In one embodiment, the digital image may be a grayscale image. The picture element value described in the above embodiments may refer to the intensity value of the picture element in the grayscale image.

In another embodiment, the digital image may be a color image, which may be represented using existing color models, such as RGB (red, green, blue) and CMYK (cyan, magenta, yellow and key) color model, wherein respective color values (in general picture element values) are associated with one or more picture elements. The picture element value described in the above embodiments may refer to a weighted average value of the color component values. In an illustrative example wherein the digital image is a RGB image, the RGB image may be converted to $YC_bC_r$ color space, including a Y component representing the luminance component and $C_B$ and $C_R$ components representing the blue-difference and red-difference chrominance components. In this example, the picture element value described in the above embodiments may refer to the Y component value of the picture element in the color image.

In an embodiment, if the edge value is not greater than the predefined threshold value, the edge value may be kept unchanged.

According to an embodiment, the edge map is downscaled at least once. The determining for each edge value if the edge value is greater than the predefined threshold value may be carried out for each edge value of the downscaled edge map.

In an embodiment, the at least once downscaling of the edge map may include maximum filtered downscaling. The maximum edge value within a predefined neighboring region in the edge map may be assigned to each element of the downscaled edge map.

In another embodiment, the at least once downscaling of the edge map may further include an adaptive downscaling. The adaptive downscaling may include an average filtered downscaling, wherein the average edge value within a predefined neighboring region in the edge map may be assigned to each element of the downscaled edge map. The downscaled edge map may be further processed by determining, for each element of the downscaled edge map, whether its edge value is greater than the predefined threshold value as described in the embodiments above.

In an embodiment, a low pass filtering may be carried out on the at least once downscaled edge map to determine a low pass filtered edge map. The low pass filtering may determine an average edge value within a predefined neighboring region of each element of the at least once downscaled edge map.

According to an embodiment, the method may further include at least once upscaling the downscaled edge map or the low pass filtered edge map. The depth image may be determined using the at least once upscaled edge map.

In an embodiment, the upscaling may include linear interpolation over a predefined neighboring region in the downscaled edge map or the low pass filtered edge map.

According to an embodiment, before edge filtering the digital image to determine the edge map, the digital image may be downscaled for one or more times. The edge filtering in various embodiments may be carried out for each picture element of the downscaled digital image.

In an embodiment, the depth image may be determined using the processed edge map via a piece-wise linear mapping function. In another embodiment, the depth image may be determined using the processed edge map via a S-curve mapping function. Other suitable mapping functions may also be used in other embodiments.

Another embodiment is directed to a device for determining a depth image for a digital image including a plurality of picture elements (also referred to as pixels). The device includes an edge filter configured to filter the digital image to determine an edge map, wherein the edge map includes a plurality of edge values and each edge value is associated with at least one picture element. The device further includes a processor configured to determine, for each edge value, if the edge value is greater than a predefined threshold value; to increase the edge value to determine a processed edge map if the edge value is greater than the predefined threshold value; and to determine the depth image using the processed edge map.

In an embodiment, the device further includes a downscaling circuit coupled to the edge filter and configured to at least once downscale the edge map. The processor is configured to carry out the determining for each edge value if the edge value is greater than the predefined threshold value for each edge value of the downscaled edge map.

In a further embodiment, the device may include a low pass filter coupled to the downscaling circuit and configured to determine a low pass filtered edge map from the at least once downscaled edge map.

In an embodiment, the device may further include an upscaling circuit coupled to the downscaling circuit or the low pass filter and configured to at least once upscale the downscaled edge map or the low pass filtered edge map. The processor may be configured to determine the depth image using the at least once upscaled edge map.

Various embodiments described in the context of the method for determining a depth image for a digital image are analogously valid for the device, and vice versa.

The various filter and circuit, such as the edge filter, the processor, the downscaling circuit, the low pass filter, and the upscaling circuit may each be configured to carry out the functions described in the method of various embodiments above.

In an embodiment, the various "filter", "processor" and "circuit" comprised in the image processing device may be understood as any kind of a logic implementing entity, which may be special purpose circuitry or a processor executing software stored in a memory, firmware, or any combination thereof. Thus, in an embodiment, a "filter", "processor" or "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "filter", "processor" or "circuit" may also be a processor executing software, e.g. any kind of computer program, e.g. a computer program using a virtual machine code such as e.g. Java. Any other kind of implementation of the respective functions described in the embodiments in this description may also be understood as a "filter", "processor" or "circuit" in accordance with an alternative embodiment. In an embodiment, the device for determining a depth image may be a circuit described above configured to perform the method for determining a depth image for a digital image.

In another embodiment, a computer readable medium having a program stored thereon may be provided, wherein the program is to make a computer execute a method described in the above embodiments. The computer readable medium may include any data storage device, such as read-only memory (ROM), random-access memory (RAM), CD-ROMs, magnetic tapes, floppy disks and optical data storage devices.

In this context, the device as described in this description may include a memory which is for example used in the processing carried out by the device. A memory used in the embodiments may be a volatile memory, for example a DRAM (Dynamic Random Access Memory), or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory).

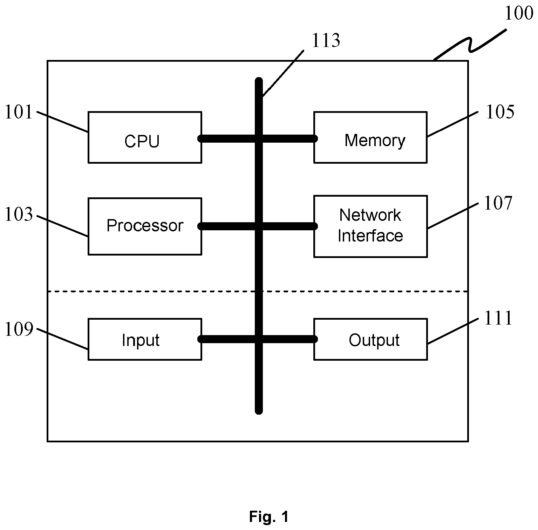

FIG. 1 shows a schematic diagram of a device for determining a depth image according to various embodiments.

The device 100 may be implemented by a computer system. In various embodiments, the edge filter, the processor, the downscaling circuit, the low pass filter, and the upscaling circuit may also be implemented as modules executing on one or more computer systems. The computer system may include a CPU 101 (central processing unit), a processor 103, a memory 105, a network interface 107, input interface/devices 109 and output interface/devices 111. All the components 101, 103, 105, 107, 109, 111 of the computer system 100 may be connected and communicating with each other through a computer bus 113.

The memory 105 may be used as for storing digital images, edge maps, processed edge maps, downscaled edge maps, low pass filtered edge maps, upscaled edge maps, depth images, threshold values, and intermediate values used and determined according to the method of the embodiments. The memory 105 may include more than one memory, such as RAM, ROM, EPROM, hard disk, etc. wherein some of the memories are used for storing data and programs and other memories are used as working memories.

In an embodiment, the memory 105 may be configured to store instructions for determining the depth image for the digital image according to various embodiments. The instructions, when executed by the CPU 101, may cause the CPU 101 to edge filter the digital image, determine for each edge value if the edge value is greater than a predefined threshold value, increase the edge value to determine a processed edge map if the edge value is greater than the predefined threshold value, and determine the depth image using the processed edge map. The instruction may also cause the CPU 101 to store the digital image, the edge map, the processed edge map, the downscaled edge map, the low pass filtered edge map, the upscaled edge map, and the depth image determined according to the method of the embodiments in the memory 105.

In another embodiment, the processor 103 may be a special purpose processor, in this example, an image processor, for executing the instructions described above.

The CPU 101 or the processor 103 may be used as the device as described in various embodiments below, and may be connected to an internal network (e.g. a local area network (LAN) or a wide area network (WAN) within an organization) and/or an external network (e.g. the Internet) through the network interface 107.

The input 109 may include a keyboard, a mouse, etc. The output 111 may include a display for display the images processed in the embodiments below.

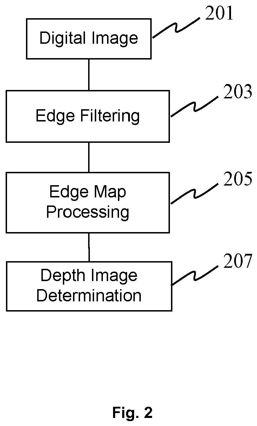

FIG. 2 shows a flow diagram according to various embodiments.

Given a digital image 201 including a plurality of picture elements, the digital image 201 is edge filtered at 203 to determine an edge map, wherein the edge map includes a plurality of edge values and each edge value is associated with at least one picture element of the digital image 201. There is a statistically monotonic relationship between the sharpness level of the image regions and the associated depths. Usually sharper regions are closer to an observer, whereas smoother regions are farther to the observer. Accordingly, the edge map may be used as a sharpness cue in the determination of depth image.

The digital image 201 may be received via a network interface, or may be stored on a data storage. According to an embodiment, the digital image may be downscaled for one or more times. The edge filtering and the subsequent processing on the digital image 201 may be similarly carried out on the downscaled image accordingly. In the embodiment wherein the digital image is downscaled, each edge value of the edge map may be associated with more than one pixels of the digital image 201.

In an embodiment, the digital image 201 may be edge filtered at 203 by determining, for each picture element of the digital image, a maximum picture element value associated with a picture element in a predefined neighboring region of the respective picture element and a minimum picture element value associated with a picture element in a predefined neighboring region of the respective picture element. A difference value between the maximum picture element value and the minimum picture element value may be determined, and the difference value may be associated with the respective at least one picture element. Each edge value associated with at least one picture element may be determined based on the difference value. In this embodiment, the edge filtering may include maximum-minimum filtering. In other embodiments, the edge filtering may include other filtering suitable for detecting the edges, such as maximum filtering and average filtering.

In one embodiment wherein the digital image 201 is a grayscale image, the picture element value described in the edge filtering may refer to the intensity value of the picture element in the grayscale image. In another embodiment wherein the digital image 201 is a color image, the picture element value described in the edge filtering may refer to a weighted average value of the color component values of the picture element.

After the edge map is determined at 203, the edge map is further processed at 205.

For each edge value of the edge map, it is determined if the edge value is greater than a predefined threshold value. If the edge value is greater than the predefined threshold value, the edge value is increased to determine a processed edge map. If the edge value is not greater than the predefined threshold value, the edge value may be kept unchanged.

In an embodiment, if the edge value is greater than the predefined threshold value, the edge value may be increased dependent on the difference between the edge value and the predefined threshold value.

In another embodiment, determining if the edge value is greater than the predefined threshold value may include determining a difference value between a maximum edge value and a minimum edge value within a predefined neighboring region, and determining whether the difference value is greater than the predefined threshold value. If the difference value is greater than the predefined threshold value, the edge value may be increased dependent on the difference between the maximum edge value within the predefined neighboring region and the predefined threshold value.

According to an embodiment, the processing of the edge map further includes downscaling the edge map at least once to determine a downscaled edge map, before determining whether the edge value is greater than the predefined threshold value. The determination for each edge value if the edge value is greater than the predefined threshold value is carried out for each edge value of the downscaled edge map. In an embodiment, the at least once downscaling of the edge map may include maximum filtered downscaling. The maximum edge value within a predefined neighboring region in the edge map may be assigned to each element of the downscaled edge map.

In another embodiment, the at least once downscaling of the edge map may further include an adaptive downscaling. The adaptive downscaling may include an average filtered downscaling, wherein the average edge value within a predefined neighboring region in the edge map may be assigned to each element of the downscaled edge map. The downscaled edge map is further processed by determining, for each element of the downscaled edge map, whether its edge value is greater than the predefined threshold value as described in the embodiments above.

In a further embodiment, a low pass filtering may be carried out on the at least once downscaled edge map to determine a low pass filtered edge map. The low pass filtering may determine an average edge value within a predefined neighboring region of each element of the at least once downscaled edge map.

According to an embodiment, the downscaled edge map or the low pass filtered edge map determined in the above embodiments may be upscaled at least once. In an embodiment, the upscaling may include linear interpolation over a predefined neighboring region in the downscaled edge map or the low pass filtered edge map.

The depth image may be determined using the at least once upscaled edge map.

Based on the processed edge map in accordance with the above embodiments or the at least once upscaled edge map, a depth image is determined at 207. In an embodiment, the depth image may be determined using the processed edge map via a piece-wise linear mapping function. In another embodiment, the depth image may be determined using the processed edge map via a S-curve mapping function. Other suitable mapping functions may also be used in other embodiments. For example, a non-linear mapping function may be used taking into consideration of the depth perception characteristics of real-life human visual system.

A detailed description of the various embodiments is provided below.

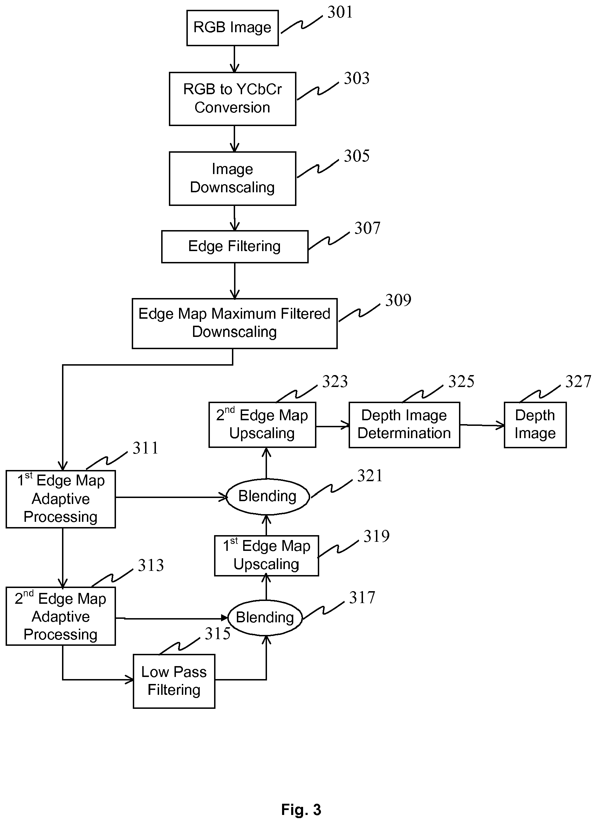

Fig. 3 shows a flow diagram according to an embodiment.

For illustrative purpose, in the following embodiments described with reference to Fig. 3, a RGB image, e.g. with a resolution of 1920x1080, is provided as the digital image. It is to be noted that the various embodiments may also be applied to a color image represented in other color models, or a grayscale image as well.

Given a RGB image 301, a RGB to YCbCr conversion is carried out at 303 to convert the RGB image 301 to YCbCr format. Each pixel of the image 301 may include a Y component representing the luminance component, and $C_B$ and $C_R$ components representing the blue-difference and red-difference chrominance components, respectively. In the following, the Y component of the YCbCr format image is used for further processing. In other embodiments, the RGB image may be converted to other suitable format to obtain the luminance information of the image for further processing.

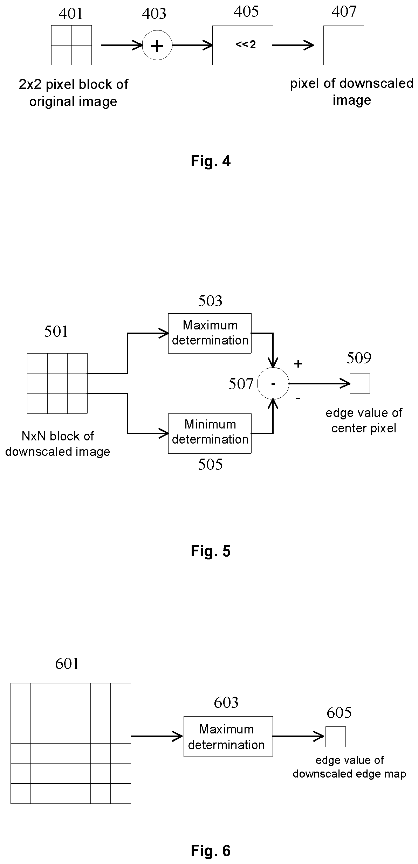

In an embodiment, the Y component image may be downscaled at least once at 305. In an illustrative example, the Y component image may be downscaled by 2x2, such that the resolution of Y component image is decreased from 1920x1080 to 960x540. The original Y component image may be divided into 960x540 blocks, wherein each block includes 4 pixels (2x2). Mean of the pixels within a block is determined to be the pixel value of a pixel in the downscaled image corresponding to the block in the original Y component image. As shown in Fig. 4, pixels values (e.g. Y component values of the pixels) of a 2x2 pixel block in the original Y component image is added at 403, and then averaged at 405 to obtain the pixel value 407 in the downscaled image. The downscaling operation by 2x2 may be carried out in accordance with the following equation:

$$I_{downscale}(x,y) = \left( \sum_{k=0}^{1} \sum_{l=0}^{1} I_{original}\big((2*x+k)(2*y+l)\big) \right) \bigg/ 4$$

wherein $I_{original}$ and $I_{downscale}$ represents the original image and the downscaled image, respectively. $(x, y)$ represents the coordinates of a pixel.

The averaging operation (e.g. a low pass filtering operation) in the image downscaling at 305 may decrease the noise level in the original image. In addition, since the number of image elements is decreased, the overall complexity of the following edge filtering and processing may also be decreased by at least the same amount. Further, the impact window of the following operations may be increased in both vertical and horizontal directions. It is noted that, instead of the averaging operation described above, any other types of low pass filtering operations may be used.

Edge filtering may be carried out over the downscaled image at 307 to determine an edge map. In an embodiment, for each pixel of the downscaled image, a maximum pixel value and a minimum pixel value in a predefined neighboring region of the pixel are determined. The pixel value may be the luminance value of the pixel in the downscaled image as determined at 305 above. In general, any type of edge filter process may be provided to determine the edge map.

As shown in Fig. 5, a NxN block 501 including neighboring pixels is located for each pixel (represented by the center pixel of the NxN block 501). A maximum pixel value associated with a pixel in the NxN block 501 is determined at 503, and a minimum pixel value associated with a pixel in the NxN block 501 is determined at 505. A difference value between the maximum pixel value and the minimum pixel value is determined at 507, which may be determined as the edge value of the center pixel. The difference value may thus be associated with the center pixel of the NxN block, and may be associated with a plurality of pixel in the original image corresponding to the center pixel of the downscaled image. The edge values determined for all pixels of the downscaled image may form an edge map. In this illustrative example, the determined edge map has the same resolution of 960x540 as the downscaled image.

In an illustrative example, the NxN neighboring region may be a 3x3 region, although other region sizes may be provided in alternative embodiments. The edge filtering described above may be performed in accordance with the following equations:

$$Y_{max}(x,y) = max\big(Y(x+k,y+l)\big) \qquad k = -1,0,1; \quad l = -1,0,1$$

$$Y_{min}(x,y) = min\big(Y(x+k,y+l)\big) \qquad k = -1,0,1; \quad l = -1,0,1$$

$$Edge\ Map(x,y) = Y_{max}(x,y) - Y_{min}(x,y)$$

wherein Y represents the luminance value (e.g., Y component value) of the pixel. Ymax and Ymin represents the maximum pixel value and the minimum pixel value within the predefined neighboring region. EdgeMap represents the edge value determined for the pixel.

In the above embodiments of determining the edge map, a maximum-minimum operation is used. Normally edges and textures exist mostly on foreground (FG) objects, and accordingly it is important to extend these cues to cover the whole FG object without leaving out any parts of the FG object in the depth image determination. The maximum-minimum edge filtering operation in the above embodiments may help to prevent missing of edge energy (i.e. sharpness cue) in the edge map detection.

The edge filtering at 307 described above is carried out on the downscaled image determined at 305. It is noted that in other embodiments the edge filtering may be carried out on the original image if the image downscaling is not performed.

The edge map determined at 307 represents an initial estimate of the edge. This edge map is further processed in accordance with the embodiments below. In an embodiment, maximum filtered downscaling may be performed on the edge map at 309. The maximum filtered downscaling may include determining a maximum edge value within a predefined neighboring region of a pixel to replace the edge value of the pixel, and downscaling the edge map.

In an illustrative example, the edge map is downscaled by 4x4, and the resolution of the edge map is decreased from 960x540 to 240x135. Maximum filtering is used during the downscaling. Each element of the 240x135 downscaled edge map may be assigned a value determined from not only 16 edge values in the 4x4 neighboring region but also edge values of 20 further neighboring elements. As shown in Fig. 6, a 6x6 block of pixels 601 in the edge map is located, and a maximum edge value of these 36 edge values is determined at 603. The maximum edge value is determined to be the edge value 605 of the pixel in the downscaled edge map. The maximum filtered downscaling by 4x4 may be performed in accordance with the following equation:

$$EdgeMap_{maxdscaled}(x,y) = max\big(EdgeMap(4*x+k,4*y+l)\big)$$

$$k = -1,0,1,2,3,4; \qquad l = -1,0,1,2,3,4$$

wherein $EdgeMap_{maxdscaled}$ represents the downscaled edge map determined through maximum filtered downscaling.

The maximum filtered downscaling at 309 in accordance with the above embodiments may help to extend the edge energy (i.e. sharpness) to larger regions.

The maximum-minimum operation in the edge filtering 307 and the maximum filtering in the edge map downscaling 309 are used to adjust the edge values, which may help the later determined depth image to be biased towards preserving the depth integrity of foreground objects.

The downscaled edge map determined at 309 is further processed at 311 in the following.

In the 1st edge map adaptive processing at 311 according to an embodiment, a determination is made for each edge value of the downscaled edge map as to whether the edge value is greater than a predefined threshold value. If the edge value is greater than the predefined threshold value, the edge value is increased to determine a processed edge value. If the edge value is not greater than the predefined threshold value, the edge value may be kept unchanged. The processed edge value for all the pixels of the edge map forms a processed edge map.

In an embodiment, if the edge value is greater than the predefined threshold value, the edge value may be increased dependent on the difference between the edge value and the predefined threshold value. For example, the edge value may be increased by the weighted difference value between the edge value and the predefined threshold value.

In another embodiment, the determination as to if the edge value is greater than the predefined threshold value may include determining a difference value between a maximum edge value and a minimum edge value within a predefined neighboring region, and determining whether the difference value is greater than the predefined threshold value. If the difference value is greater than the predefined threshold value, the edge value may be increased dependent on the difference between the maximum edge value within the predefined neighboring region and the predefined threshold value.

In the 1st edge map adaptive processing at 311 according to various embodiments, a further downscaling is performed before the above processing of the downscaled edge map. The downscaling may be performed using an average filtering, and other suitable types of filtering. The further downscaled edge image is then processed, e.g. to determine whether each edge value is greater than the predefined threshold value and to determined the processed edge value accordingly. In general, the process may include an arbitrary number of downscaling processes and respective edge map adaptive processing applied on the respectively downscaled edge map.

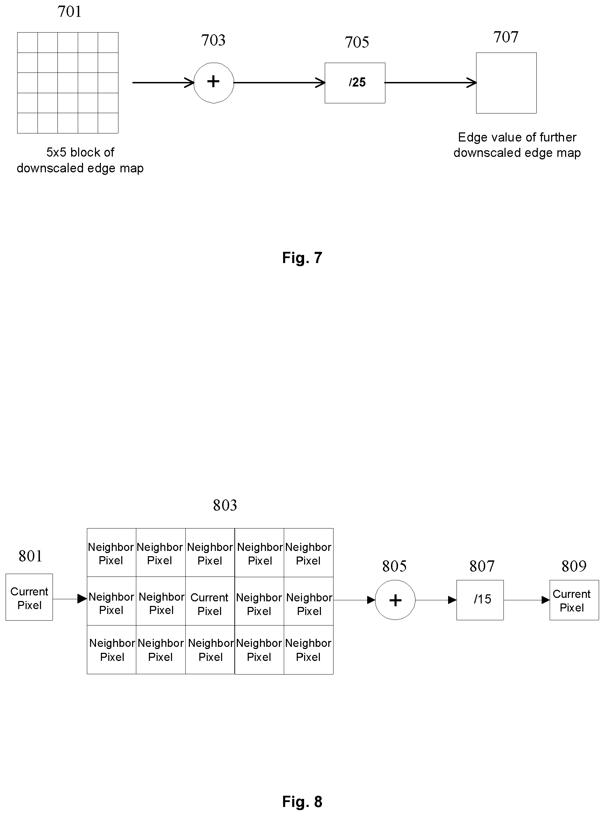

In an illustrative example shown in Fig. 7, a further downscaling by 5x5 is applied to the downscaled image in the 1st edge map adaptive processing 311. Based on a 5x5 block of pixels 701 in the downscaled edge map, the mean of the edge values within the 5x5 block is determined through an adder 703 and a divider 705, and the determined mean is assigned to the center pixel to become the edge value of the further downscaled edge map. The average filtered downscaling may be performed in accordance with the following equation:

$$EdgeMap_{downscale}(x,y) = \left( \sum_{k=0}^{4} \sum_{l=0}^{4} EdgeMap_{maxdscaled}(5*x+k, 5*y+l) \right) \Big/ 25$$

wherein $EdgeMap_{downscale}$ represents the further downscaled edge map determined through the above average filtered downscaling.

The further downscaled edge map may be modified through a maximum-filtering operation to determine the processed edge map as mentioned above.

Illustratively, for each edge value of the downscaled edge map $EdgeMap_{maxdscaled}$, a maximum edge value and a minimum edge value within a neighboring region is determined, and a difference value between the maximum edge value and the minimum edge value is determined. The neighboring region may be of the same size as or may be of a different size from the further downscaling block (e.g. 5x5 block) as used in the embodiment of Fig. 7. If the difference value is greater than a predefined threshold value, the corresponding edge value in the further downscaled edge map $EdgeMap_{downscale}$ may be increased dependent on the difference between the maximum edge value and the predefined threshold value as below:

$$If\ (max - min) > Thr$$

$$EdgeMap_{downscale}\ += alpha*(max - Thr)$$

wherein *max* and *min* represent the maximum edge value and the minimum value of a neighboring region in the downscaled edge map $EdgeMap_{maxascaled}$, respectively. *Thr* represents the predefined threshold value. *alpha* represents a weighting factor. In an embodiment, the *alpha* parameter may have a value in the range of [3, 8]. In other embodiments, the *alpha* parameter may have a value in other ranges, depending on the edge value characteristic of a local region, e.g. depending on whether there is sufficient number of edge values higher than a high threshold or sufficient number of edge values lower than a low threshold in the local region.

The adaptive processing of 311 includes the further downscaling and the modification of the further downscaled edge map as described above. Accordingly, a processed edge map is provided. In an illustrative example wherein the downscaled edge map $EdgeMap_{maxdscaled}$ has a resolution of 240x135, the downscaled edge map may be further downscaled by determining a mean edge value for each 5x5 block of pixels in the downscaled edge map, and each mean edge value may be modified depending on whether the max-min value of the respective 5x5 block in the downscaled edge map is greater than the predefined threshold, in the adaptive processing of 311. The modified mean edge values may be assigned to a center pixel of the respective 5x5 block, such that the processed edge map having a resolution of 48x27 is determined in the adaptive processing of 311.

According to the above embodiments, the adaptive processing of 311 detects and strengthens significantly high edge values, thereby providing better depth perception in the finally determined depth image.

The above described adaptive processing of 311 is performed for more than one time. In an embodiment, a 2nd adaptive processing 313 is performed over the processed edge map determined at 311. The 2nd adaptive processing 313 includes a further downscaling and modification of the further downscaled edge map, similar to the 1st adaptive processing 311. The same or a different degree of downscaling is performed at the 2nd adaptive processing 313. For example, one or more further downscalings by e.g. 3x3 may be carried out. Accordingly, the processed edge map determined at 313 may have a resolution of 16x9.

In a further embodiment, a low pass filtering 315 may be further carried out on the processed edge map determined at 313 above, to determine a low pass filtered edge map.

In an embodiment as shown in Fig. 8, an averaging filter is used as the low pass filter. For a pixel 801, a neighboring region 803 is located. In this example, a 5x3 neighboring region 803 is located. The edge values within the neighboring region 803 are added at 805, and averaged at 807 to obtain the low pass filtered edge value 809.

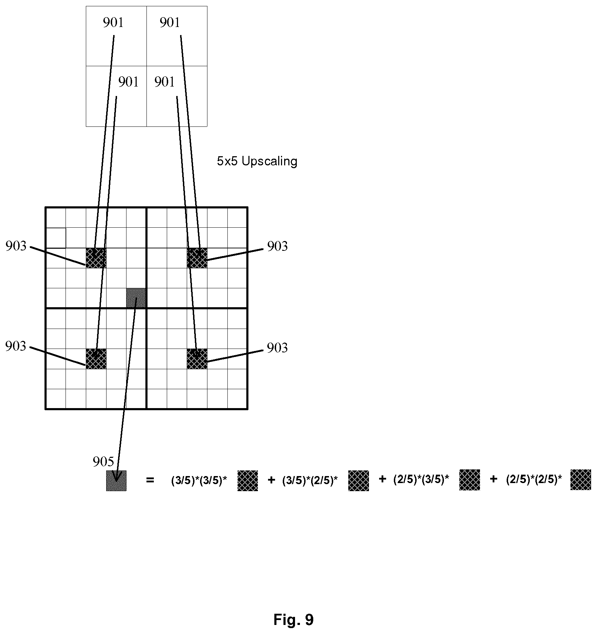

The low pass filtered edge map may be then upscaled for one or more times, to obtain the final edge map having the same resolution as the downscaled edge map determined at 309. In an embodiment, the upscaling operation may include a linear interpolation. An example of the 5x5 upscaling operation is illustrated in Fig. 9.

The edge values of the pixels 901 in the low pass filtered edge map may be used as the edge value of the respective center pixel 903 of a 5x5 block in the upscaled edge map. The edge values of the non-center pixels in each block may be determined using linear interpolation, based on the edge values of the neighboring center pixels. For example, as illustrated in Fig. 9, the edge value of a non-center pixel 905 depicted in grey color may be determined to be a weighted sum of the edge values of its 4 neighboring center pixels 903. The weights of the edge values of the neighboring center pixels 903 may be determined to be inversely proportional to the distance between the non-center pixel 905 and its neighboring center pixels 903.

Depending on the times of downscaling operations, the same times of upscaling operations are performed. For example, as shown in Fig. 3, a 1st edge map upscaling 319 and a 2nd edge map upscaling 323 are performed, corresponding to the 1st edge map adaptive processing 311 and the 2nd edge map adaptive processing 313.

In a further embodiment, the upscaling operation may include a blending operation to blend a pre-downscaling edge map and a corresponding upscaled edge map at the same resolution level.

In an illustrative example, the processed edge map at 313 and the (optional) low pass filtered edge map at 315 have the same resolution of 16x9, and these two edge maps are blended at 317 to determine a first blended edge map. The first blended edge map is upscaled, e.g. by 3x3 corresponding to the downscaling performed at 313, to obtain a upscaled edge map of 48x27. The upscaled edge map of 48x27 is further blended with the processed edge map of 48x27 at 311 to determine a further blended edge map at 321. The further blended edge map at 321 may be further upscaled, e.g. by 5x5 corresponding to the downscaling performed at 311, to obtain the further upscaled edge map of 240x135.

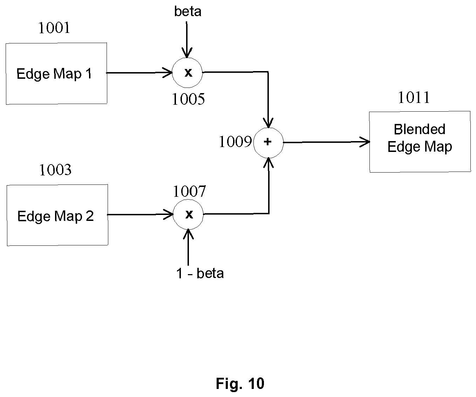

The blending operations at 317, 321 may be performed dependent on a beta parameter. As shown in Fig. 10, the first edge map 1001 (e.g. the processed edge map at 313) is weighted by the beta parameter at 1005, and the second edge map 1003 (e.g. the low pass filtered edge map at 315) is weighted by (1-beta). The weighted edge maps are then summed at 1009 to obtain the blended edge map 1011 (e.g. the blended edge map determined at 317). In an embodiment, the beta parameter may be determined adaptively from an edge frequency analysis of the image. For example, more weight may be assigned to the pre-downscaling edge map to provide more local depth variation in a high frequency edge map. The beta parameter may have a value in the range of [0, 1].

The bias towards encircling the foreground objects as provided by the edge filtering 307 and the maximum filtered downscaling 309 may be at least partially compensated by the upscaling operation 319, 323 (e.g. the interpolation) and by the averaging filtered downscaling at the adaptive processing operations 311, 313. This may help to produce a smooth depth image.

The adaptive processing 311, 313, the low pass filtering 315, the blending 317, 321, and the upscaling operations 319, 323 described in the various embodiments above provides a scale-space (i.e. multi-scale) edge analysis and synthesis filter, in which the downscaling and blending operations may be adapted and adjusted among different scales. Accordingly, the method of various embodiments is provided from coarser to finer levels, i.e., in a multi-scale manner, to mimic the characteristics of human visual system and to model depth perception properly.

The final edge map (e.g. the further scaled edge map at 323) is used to determine the depth image 327 at 325.

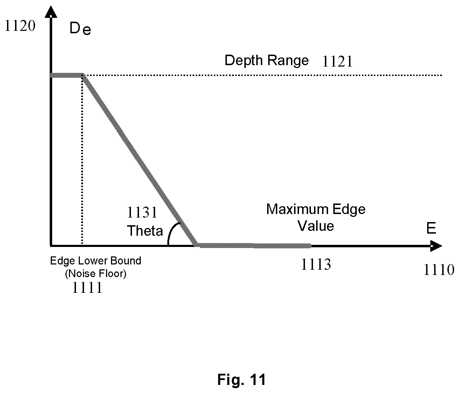

In an embodiment as shown in Fig. 11, the depth values of the depth image may be determined using the edge values of the final edge map via a piece-wise linear mapping function.

The x-axis and y-axis represent edge values and depth values, respectively. The edge lower bound value 1111 represents the edge noise floor, which may be predetermined or may be made adapted depending on the characteristic of the image. Edge values below the edge lower bound value 1111 may be assigned with the highest depth value, as shown in Fig. 11. The depth range 1121 defines how much depth variation may be obtained based on the edge value variations. The tangent of the mapping function, Theta 1131, represents the depth scale. A low valued depth scale factor may push regions of the image more to the background, whereas a high valued depth scale factor may push regions of the image more to the foreground. A range of edge values below the maximum edge value 1113 may be mapped to the same depth value, e.g. the lowest depth value representing the foreground object.

In another embodiment, the depth image may be determined using the final edge map via other suitable mapping functions. For example, when a look-up table is provided, a S-curve mapping function may be used, wherein the noise floor may also be used to set the starting point of the S-curve and the depth scale factor may be used for blending parameters.

In the above embodiments, the examples of various sized pixel blocks used in operations 305, 307, 309, 311, 313, 315, 319 are used for illustration purpose. It is to be noted that different sized blocks may be used in other embodiments depending on the characteristics of the images.

The method and the device of various embodiments analyses the image frames using the luminance pixel values at different scales in space and time. The scale-space hierarchical processing leads to diverse and adaptive assignments on local depth variations.

The embodiments above provide a method and a device for determining a depth image indicating the relative depth of the objects in the digital image, i.e., which objects are in the front and which objects are at the back, using a 2D digital image (i.e. a single viewpoint image). Based on the determined depth image, 2D images or videos may be converted to 3D images or videos.

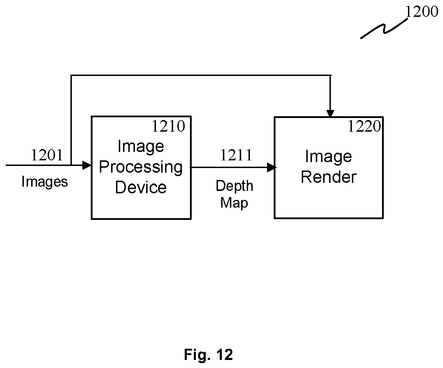

FIG. 12 shows an imaging system according to an embodiment.

The imaging system 1200 receives an image 1201, which may be a digital image 201, 301 as described above.

The imaging system 1200 includes an image processing device 1210 for determining a depth image for each image 1201 in accordance with the various embodiments above. The determined depth image 1211 is transmitted to an image render 1220.

The image render 1220 may receive the image 1201 and the depth map 1211 and render the image 1201 for 3D display.

The imaging system 1200 may be embodied in a 3D TV or a computer, for example.

The method and the device for determining the depth image in the above embodiments provide accurate depth values and realistic depth perception at low computation costs. In addition, the method and the device are based on the 2D images or videos, which enables displaying of 2D content in a 3D display and may also be used in any other areas in which the depth information or the information about the location of the objects in a scene is required.

**Claims**

1. A method for determining a depth image for a digital image comprising a plurality of picture elements, the method comprising:

   • edge filtering the digital image to determine an edge map (307), the edge map comprising a plurality of edge values, wherein each edge value is associated with at least one picture element,

   **characterized by** further comprising:

   • at least once downscaling the edge map (309);
   • performing a first edge map adaptive processing to the downscaled edge map (311),
   wherein said first edge map adaptive processing comprises

- further downscaling the edge map;
- for the further downscaled edge map, determining for each edge value, if the edge value is greater than a predefined threshold value;
- if the edge value is greater than the predefined threshold value, increasing the edge value to determine a processed edge map;

• performing a second edge map adaptive processing after the first edge map adaptive processing (313), wherein said second edge map adaptive processing comprises

- further downscaling the processed edge map;
- for the further downscaled processed edge map, determining for each edge value, if the edge value is greater than a predefined threshold value;
- if the edge value is greater than the predefined threshold value, increasing the edge value to determine a processed edge map;

• once upscaling the output of the second edge map adaptive processing (319);
• blending the output of the first edge map adaptive processing and upscaled output of the second edge map adaptive processing (321)
• determining the depth image using the blended edge map (325).

2. The method of claim 1,
wherein the edge filtering comprises:

• determining for each picture element of the digital image a maximum picture element value associated with a picture element in a predefined neighboring region of the respective picture element;
• determining for each picture element of the digital image a minimum picture element value associated with a picture element in a predefined neighboring region of the respective picture element;
• determining a difference value between the maximum picture element value and the minimum picture element value; and
• associating the difference value with the respective picture element.

3. The method of any one of claims 1 or 2, further comprising:

if the edge value is not greater than the predefined threshold value, keeping the edge value unchanged.

4. The method of claim 1,
wherein the at least once downscaling the edge map comprises maximum filtered downscaling.

5. The method of claim 1, further comprising:

before the step of once upscaling the output of the second edge map adaptive processing, low pass filtering the output of the second edge map adaptive processing (315) and blending the filtered edge map with output of the second edge map adaptive processing (317).

6. The method of any one of claims 1 to 5, further comprising:

• at least once downscaling the digital image (305);
• wherein the edge filtering is carried out for each picture element of the downscaled digital image (307).

7. A device (100) for determining a depth image for a digital image comprising a plurality of picture elements, the device comprising:

• an edge filter configured to filter the digital image to determine an edge map, the edge map comprising a plurality of edge values, wherein each edge value is associated with at least one picture element,

**characterized by** further comprising:

• a downscaling circuit coupled to the edge filter and configured to at least once downscale the edge map;

- a processor (103) configured to

  - perform a first edge map adaptive processing to the downscaled edge map, wherein said first edge map adaptive processing comprises

    - further downscaling the edge map;
    - for the further downscaled edge map, determining for each edge value, if the edge value is greater than a predefined threshold value;
    - if the edge value is greater than the predefined threshold value, increasing the edge value to determine a processed edge map;

  - perform a second edge map adaptive processing after the first edge map adaptive processing, wherein said second edge map adaptive processing comprises

    - further downscaling the processed edge map;
    - for the further downscaled processed edge map, determining for each edge value, if the edge value is greater than a predefined threshold value;
    - if the edge value is greater than the predefined threshold value, increasing the edge value to determine a processed edge map;

  - upscale the output of the second edge map adaptive processing;

  - blend the output of the first edge map adaptive processing and upscaled output of the second edge map adaptive processing • determine the depth image using the blended edge map.

8. The device (100) of claim 7, wherein the edge filter is configured to:

   - determine for each picture element of the digital image a maximum picture element value associated with a picture element in a predefined neighboring region of the respective picture element;
   - determine for each picture element of the digital image a minimum picture element value associated with a picture element in a predefined neighboring region of the respective picture element;
   - determine a difference value between the maximum picture element value and the minimum picture element value; and
   - associate the difference value with the respective picture element.

9. The device (100) of any one of claims 7 or 8, wherein the processor is further configured to, if the edge value is not greater than the predefined threshold value, keep the edge value unchanged.

10. The device (100) of claim 7, wherein the downscaling circuit is configured to at least once downscaling the edge map using maximum filtered downscaling.

11. The device (100) of any one of claims 7 or 10, further comprising:

   a low pass filter coupled to the processor and configured to determine a low pass filtered edge map from the output of the second edge map adaptive processing.

**Patentansprüche**

1. Verfahren zum Bestimmen eines Tiefenbildes für ein digitales Bild, das eine Vielzahl von Bildelementen aufweist, wobei bei dem Verfahren:

   das digitale Bild kantengefiltert wird, um eine Kantenabbildung zu bestimmen (307), wobei die Kantenabbildung eine Vielzahl von Kantenwerten aufweist, wobei jeder Kantenwert wenigstens einem Bildelement zugeordnet ist, **dadurch gekennzeichnet, dass** bei dem Verfahren weiter:

die Kantenabbildung wenigstens einmal herunterskaliert wird (309),
die herunterskalierte Kantenabbildung einer ersten adaptiven Kantenabbildungs-Prozessierung unterzogen wird (311),
wobei die erste adaptive Kantenabbildungs-Prozessier-ung beinhaltet,

- die Kantenabbildung weiter herunterzuskalieren,
- für die weiter herunterskalierte Kantenabbildung für jeden Kantenwert festzustellen, ob der Kantenwert größer als ein vordefinierter Schwellenwert ist,
- wenn der Kantenwert größer als der vordefinierte Schwellenwert ist, den Kantenwert zu erhöhen, um eine prozessierte Kantenabbildung zu bestimmen,
eine zweite adaptive Kantentabbildungs-Prozessierung nach der ersten adaptiven Kantentabbildungs-Prozessierung durchgeführt wird (313), wobei die zweite adaptive Kantenabbildungs-Prozessierung beinhaltet,
- die prozessierte Kantenabbildung weiter herunter-zuskalieren,
- für die weiter herunterskalierte prozessierte Kantenabbildung für jeden Kantenwert festzustellen, ob der Kantenwert größer als ein vordefinierter Schwellenwert ist,
- wenn der Kantenwert größer als der vordefinierte Schwellenwert ist, den Kantenwert zu erhöhen, um eine prozessierte Kantenabbildung zu bestimmen,

die Ausgabe der zweiten adaptiven Kantenabbildungs-Prozessierung einmal hochskaliert wird (319),
die Ausgabe der ersten adaptiven Kantenabbildungs-Prozessierung und die hochskalierte Ausgabe der zweiten adaptiven Kantenabbildungs-Prozessierung gemischt werden (321),
das Tiefenbild unter Verwendung der gemischten Kantenabbildung bestimmt wird (325).

2. Verfahren nach Anspruch 1, wobei die Kantenfilterung beinhaltet:

für jedes Bildelement des digitalen Bildes einen maximalen Bildelementwert zu bestimmen, der einem Bildelement in einer vordefinierten Nachbarregion des jeweiligen Bildes zugeordnet ist,
für jedes Bildelement des digitalen Bildes einen minimalen Bildelementwert zu bestimmen, der einem Bildelement in einer vordefinierten Nachbarregion des jeweiligen Bildes zugeordnet ist,
einen Differenzwert zwischen dem maximalen Bildelementwert und dem minimalen Bildelementwert zu bestimmen und
den Differenzwert dem jeweiligen Bildelement zuzuordnen.

3. Verfahren nach einem der Ansprüche 1 oder 2, bei dem weiter:

wenn der Kantenwert nicht größer als der vordefinierte Schwellenwert ist, der Kantenwert unverändert beibehalten wird.

4. Verfahren nach Anspruch 1, wobei das wenigstens einmalige Herunterskalieren der Kantenabbildung ein maximal gefiltertes Herunterskalieren beinhaltet.

5. Verfahren nach Anspruch 1, bei dem weiter:

vor dem Schritt des einmaligen Hochskalierens der Ausgabe der zweiten adaptiven Kantenabbildungs-Prozessier-ung die Ausgabe der zweiten adaptiven Kantenabbildungs-Prozessierung eine Tiefpassfilterung unterzogen wird (315) und die gefilterte Kantenabbildung mit der Ausgabe der zweiten adaptiven Kantenabbildungs-Prozessierung gemischt (317) wird.

6. Verfahren nach einem der Ansprüche 1 bis 5, bei dem weiter:

das digitale Bild wenigstens einmal herunterskaliert wird (305),
wobei die Kantenfilterung für jedes Bildelement des herunterskalierten digitalen Bildes durchgeführt wird (307).

7. Vorrichtung (100) zum Bestimmen eines Tiefenbildes für ein digitales Bild, das eine Vielzahl von Bildelementen aufweist, wobei die Vorrichtung aufweist:

ein Kantenfilter, das dazu vorbereitet ist, das digitale Bild zu filtern, um eine Kantenabbildung zu bestimmen, wobei die Kantenabbildung eine Vielzahl von Kantenwerten aufweist, wobei jeder Kantenwert wenigstens einem Bildelement zugeordnet ist,

**dadurch gekennzeichnet, dass** sie weiter aufweist:

eine Herunteskalierungs-Schaltung, die mit dem Kantenfilter gekoppelt ist und dazu vorbereitet ist, die Kantenabbildung wenigstens einmal herunterzuskalieren,

einen Prozessor (103), der dazu vorbereitet ist,

die herunterskalierte Kantenabbildung einer ersten adaptiven Kantenabbildungs-Prozessierung zu unterziehen, wobei die erste adaptive Kantenabbildungs-Prozessierung beinhaltet,

- die Kantenabbildung weiter herunterzuskalier-en,
- für weiter herunterskalierte Kantenabbildung für jeden Kante wert festzustellen, ob der Kantenwert größer als ein vordefinierter Schwellenwert ist,
- wenn der Kantenwert größer als der vordefinierte Schwellenwert ist, den Kantenwert zu erhöhen, um eine prozessierte Kantenabbildung zu bestimmen,

eine zweite adaptive Kantenabbildungs-Prozessierung nach ersten adaptiven Kantenabbildungs-Prozessierung durchzuführen, wobei die zweite adaptive Kantenabbildungs-Prozessierung beinhaltet:

- die prozessierte Kantenabbildung weiter herunterzuskalieren,
- für die weiter herunterskalierte prozessierte Kantenabbildung für jeden Kantenwert festzustellen, ob der Kantenwert größer als ein vordefenierter Schwellenwert ist,
- wenn der Kantenwert größer als der vordefinierte Schwellenwert ist, den Kantenwert zu erhöhen, um eine prozessierte Kantenabbildung zu bestimmen,

die Ausgabe der zweiten adaptiven Kantenabbildungs Prozessierung heraufzuskalieren,

die Ausgabe der ersten adaptiven Kantenabbildungs-Prozessierung und die heraufskalierte Ausgabe der zweiten adaptiven Kantenabbildungs-Prozessierung zu mischen,

das Tiefenbild unter Verwendung der gemischten Kantenabbildung zu bestimmen.

**8.** Vorrichtung (100) nach Anspruch 7, wobei das Kantenfilter dazu vorbereitet ist,

für jedes Bildelement des digitalen Bildes einen maximalen Bildelementwert zu bestimmen, der einem Bildelement in einer vordefinierten Nachbarregion des jeweiligen Bildelements zugeordnet ist,

für jedes Bildelement des digitalen Bildes einen minimalen Bildelementwert zu bestimmen, der einem Bildelement in einer vordefinierten Nachbarregion des jeweiligen Bildelementes zugeordnet ist,

einen Differenzwert zwischen dem maximalen Bildelementwert und dem minimalen Bildelementwert zu bestimmen und

den Differenzwert dem jeweiligen Bildelement zuzuordnen.

**9.** Vorrichtung (100) nach einem der Ansprüche 7 oder 8, wobei der Prozessor weiter dazu vorbereitet ist, den Kantenwert unverändert beizubehalten, wenn der Kantenwert nicht größer als der vordefinierte Schwellenwert ist.

**10.** Vorrichtung (100) nach Anspruch 7, wobei die Herunter-skalierungs-Schaltung dazu vorbereitet ist, die Kantenabbildung unter Anwendung maximal gefilteter Herunter-skalierung wenigstens einmal herunterzuskalieren.

**11.** Vorrichtung (100) nach einem der Ansprüche 7 oder 10, die weiter aufweist:

ein Tiefpassfilter, das mit dem Prozessor verbunden ist und dazu vorbereitet ist, aus der Ausgabe der zweiten adaptiven Kantenabbildungs-Prozessierung eine tiefpassgefilterte Kantenabbildung zu bestimmen.

**Revendications**

**1.** Procédé de détermination d'une image de profondeur pour une image numérique comprenant une pluralité de pixels, le procédé comprenant :

• le filtrage de bords de l'image numérique pour déterminer une carte de bords (307), la carte de bords comprenant une pluralité de valeurs de bords, dans lequel chaque valeur de bords est associée à au moins un pixel,

**caractérisé en ce qu'**il comprend en outre :

• la réalisation d'une réduction d'échelle au moins une fois de la carte de bords (309) ;
• la réalisation d'un premier traitement adaptatif de carte de bords sur la carte de bords ayant subi une réduction d'échelle (311),
dans lequel ledit premier traitement adaptatif de carte de bords comprend

- la réalisation d'une réduction d'échelle supplémentaire de la carte de bords;
- pour la carte de bords ayant subi une réduction d'échelle supplémentaire, le fait de déterminer pour chaque valeur de bords, si la valeur de bords est supérieure à une valeur seuil prédéfinie ;
- si la valeur de bords est supérieure à la valeur seuil prédéfinie, l'augmentation de la valeur de bords pour déterminer une carte de bords traitée ;

• la réalisation d'un second traitement adaptatif de carte de bords après le premier traitement adaptatif de carte de bords (313), dans lequel ledit second traitement adaptatif de carte de bords comprend

- la réalisation d'une réduction d'échelle supplémentaire de la carte de bords traitée ;
- pour la carte de bords traitée ayant subi une réduction d'échelle supplémentaire, le fait de déterminer pour chaque valeur de bords, si la valeur de bords est supérieure à une valeur seuil prédéfinie ;
- si la valeur de bords est supérieure à la valeur seuil prédéfinie, l'augmentation de la valeur de bords pour déterminer une carte de bords traitée ;

• la réalisation d'une augmentation d'échelle une fois de la sortie du second traitement adaptatif de carte de bords (319) ;
• le mélange de la sortie du premier traitement adaptatif de carte de bords et de la sortie ayant subi une augmentation d'échelle du second traitement adaptatif de carte de bords (321)
• la détermination de l'image de profondeur à l'aide de la carte de bords mélangée (325).

2. Procédé selon la revendication 1,
dans lequel le filtrage de bords comprend :

• la détermination, pour chaque pixel de l'image numérique, d'une valeur de pixel maximale associée à un pixel dans une région voisine prédéfinie du pixel respectif ;
• la détermination, pour chaque pixel de l'image numérique, d'une valeur de pixel minimale associée à un pixel dans une région voisine prédéfinie du pixel respectif ;
• la détermination d'une valeur de différence entre la valeur de pixel maximale et la valeur de pixel minimale ; et
• l'association de la valeur de différence avec le pixel respectif.

3. Procédé selon l'une quelconque des revendications 1 ou 2, comprenant en outre :

si la valeur de bords n'est pas supérieure à la valeur seuil prédéfinie, la conservation de la valeur de bords inchangée.

4. Procédé selon la revendication 1,
dans lequel la carte de bords ayant subi une réduction d'échelle au moins une fois comprend une réduction d'échelle filtrée maximale.

5. Procédé selon la revendication 1, comprenant en outre :

avant l'étape de réalisation d'une augmentation d'échelle une fois de la sortie du second traitement adaptatif de carte de bords, la réalisation d'un filtrage passe-bas de la sortie du second traitement adaptatif de carte de bords (315) et le mélange de la carte de bords filtrée avec la sortie du second traitement adaptatif de carte de bords (317).

6. Procédé selon l'une quelconque des revendications 1 à 5, comprenant en outre :

• la réalisation d'une réduction d'échelle au moins une fois de l'image numérique (305) ;

• dans lequel le filtrage de bords est réalisé pour chaque pixel de l'image numérique ayant subi une réduction d'échelle (307).

7. Dispositif (100) de détermination d'une image de profondeur pour une image numérique comprenant une pluralité de pixels, le dispositif comprenant :

• un filtre de bords configuré pour filtrer l'image numérique pour déterminer une carte de bords, la carte de bords comprenant une pluralité de valeurs de bords, dans lequel chaque valeur de bords est associée à au moins un pixel,

**caractérisé en ce qu'**il comprend en outre :

• un circuit de réduction d'échelle couplé au filtre de bords et configuré pour réduire au moins une fois l'échelle de la carte de bords;
• un processeur (103) configuré pour
• la réalisation un premier traitement adaptatif de carte de bords sur la carte de bords ayant subi une réduction d'échelle, dans lequel ledit premier traitement adaptatif de carte de bords comprend

- la réalisation d'une réduction d'échelle supplémentaire de la carte de bords;
- pour la carte de bords ayant subi une réduction d'échelle supplémentaire, le fait de déterminer pour chaque valeur de bords, si la valeur de bords est supérieure à une valeur seuil prédéfinie ;
- si la valeur de bords est supérieure à la valeur seuil prédéfinie, l'augmentation de la valeur de bords pour déterminer une carte de bords traitée ;

• la réalisation d'un second traitement adaptatif de carte de bords après le premier traitement adaptatif de carte de bords, dans lequel ledit second traitement adaptatif de carte de bords comprend

- la réalisation d'une réduction d'échelle supplémentaire de la carte de bords traitée ;
- pour la carte de bords traitée ayant subi une réduction d'échelle supplémentaire, le fait de déterminer pour chaque valeur de bords, si la valeur de bords est supérieure à une valeur seuil prédéfinie ;
- si la valeur de bords est supérieure à la valeur seuil prédéfinie, l'augmentation de la valeur de bords pour déterminer une carte de bords traitée ;

• l'augmentation de l'échelle de la sortie du second traitement adaptatif de carte de bords ;
• le mélange de la sortie du premier traitement adaptatif de carte de bords et la sortie ayant subi une augmentation d'échelle du second traitement adaptatif de carte de bords
• la détermination l'image de profondeur à l'aide de la carte de bords mélangée.

8. Dispositif (100) selon la revendication 7,
dans lequel le filtre de bords est configuré pour :

• déterminer, pour chaque pixel de l'image numérique, une valeur de pixel maximale associée à un pixel dans une région voisine prédéfinie du pixel respectif ;
• déterminer, pour chaque pixel de l'image numérique, une valeur de pixel minimale associée à un pixel dans une région voisine prédéfinie du pixel respectif ;
• déterminer une valeur de différence entre la valeur de pixel maximale et la valeur de pixel minimale ; et
• associer la valeur de différence au pixel respectif.

9. Dispositif (100) selon l'une quelconque des revendications 7 ou 8,
dans lequel le processeur est configuré en outre pour, si la valeur de bords n'est pas supérieure à la valeur seuil prédéfinie, conserver la valeur de bords inchangée.

10. Dispositif (100) selon la revendication 7,
dans lequel le circuit de réduction d'échelle est configuré pour réduire au moins une fois l'échelle de la carte de bords à l'aide d'une réduction d'échelle filtrée maximale.

11. Dispositif (100) selon l'une quelconque des revendications 7 ou 10, comprenant en outre :

un filtre passe-bas couplé au processeur et configuré pour déterminer une carte de bords ayant subi un filtrage passe-bas à partir de la sortie du second traitement adaptatif de carte de bords.

**Fig. 1**

Digital Image — 201

Edge Filtering — 203

Edge Map Processing — 205

Depth Image Determination — 207

**Fig. 2**

RGB Image — 301

RGB to YCbCr Conversion — 303

Image Downscaling — 305

Edge Filtering — 307

Edge Map Maximum Filtered Downscaling — 309

2$^{nd}$ Edge Map Upscaling — 323

Depth Image Determination — 325

Depth Image — 327

1$^{st}$ Edge Map Adaptive Processing — 311

Blending — 321

1$^{st}$ Edge Map Upscaling — 319

2$^{nd}$ Edge Map Adaptive Processing — 313

Blending — 317

Low Pass Filtering — 315

**Fig. 3**

20

401 403 405 407

2x2 pixel block of
original image

<<2

pixel of downscaled
image

**Fig. 4**

501 503

Maximum
determination

507 −

509

+

−

edge value of
center pixel

NxN block of
downscaled image

Minimum
determination

505

**Fig. 5**

601

603

Maximum
determination

605

edge value of
downscaled edge map

**Fig. 6**

701

703          705          707

/25

5x5 block of
downscaled edge map

Edge value of further
downscaled edge map

**Fig. 7**

803

| Neighbor Pixel | Neighbor Pixel | Neighbor Pixel | Neighbor Pixel | Neighbor Pixel |
| Neighbor Pixel | Neighbor Pixel | Current Pixel | Neighbor Pixel | Neighbor Pixel |
| Neighbor Pixel | Neighbor Pixel | Neighbor Pixel | Neighbor Pixel | Neighbor Pixel |

801

Current
Pixel

805          807          809

/15

Current
Pixel

**Fig. 8**

901 | 901

901 | 901

5x5 Upscaling

903

903

903

903

905

$\boxed{\phantom{x}}$ = (3/5)*(3/5)* $\boxtimes$ + (3/5)*(2/5)* $\boxtimes$ + (2/5)*(3/5)* $\boxtimes$ + (2/5)*(2/5)* $\boxtimes$

**Fig. 9**

1001

Edge Map 1

beta

x

1005

1003

Edge Map 2

1007

x

1 - beta

1009

+

1011

Blended
Edge Map

**Fig. 10**

Fig. 11

1200

1210
Image
Processing
Device

1201
Images

1211
Depth
Map

1220
Image
Render

**Fig. 12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100073364 A1
- US 2007024614 A1